# EUROPÄISCHE PATENTSCHRIFT

(11) **EP 2 580 398 B1**
(45) Veröffentlichungstag und Bekanntmachung des Hinweises auf die Patenterteilung: **07.01.2015**
(21) Anmeldenummer: 11715403.9
(22) Anmeldetag: 30.03.2011
(51) Int. Cl.: G05D 7/01, E03C 1/08

(54) **DURCHFLUSSMENGENREGLER**
FLOW RATE REGULATOR
RÉGULATEUR DE DÉBIT

(30) Priorität: 11.06.2010 DE 202010007835 U
(43) Veröffentlichungstag der Anmeldung: 17.04.2013
(73) Patentinhaber: Neoperl GmbH, 79379 Müllheim (DE)
(72) Erfinder: STEIN, Alexander, 79241 Ihringen (DE); TARAN, Christoph, 79379 Müllheim (DE)
(74) Vertreter: Kunst, Manuel Nikolaus Johannes
(86) Internationale Anmeldenummer: PCT/EP2011/001581
(87) Internationale Veröffentlichungsnummer: WO 2011/154066

(56) Entgegenhaltungen:
- EP-A1- 0 733 748
- EP-A1- 1 933 217
- DE-U1- 8 202 024
- DE-U1-202007 008 809
- DE-U1-202008 017 031
- US-A- 4 562 960

## Beschreibung

Die Erfindung betrifft eine sanitäre Einheit bestehend aus einem Strahlregler, einem Vorsatzsieb und einem Durchflussmengenregler, dessen schalenförmiges Reglergehäuse einen auf den zuströmseitigen Stirnumfangsrandbereich des Strahlreglers und/oder des Vorsatzsiebes aufsetzbaren und als radial nach außen vorstehender Ringflansch ausgestalteten Außenumfangsrandbereich hat und einen zentralen Ringspalt aufweist, in dem ein ringförmiger Drosselkörper aus elastischem Material vorgesehen ist, der zwischen sich und einer inneren und/oder äußeren; mit einer Regelprofilierung versehenen Umfangswandung des Ringspalts einen Steuerspalt begrenzt, dessen lichter Durchflussquerschnitt unter dem Druck des durchströmenden Wassers veränderbar ist.

Durchflussmengenregler sind bereits in verschiedenen Ausführungen vorbekannt. Solche Durchflussmengenregler, die dazu bestimmt sind, die aus einer Auslaufarmatur pro Zeiteinheit ausströmende Wassermenge unabhängig von dem eventuell auch schwankenden Wasserdruck auf einen festgelegten Sollwert zu vergleichmäßigen und zu begrenzen, weisen regelmäßig ein Reglergehäuse auf, das einen zentralen Ringspalt hat, in dem ein ringförmiger Drosselkörper aus elastischem Material vorgesehen ist. Dieser Drosselkörper begrenzt zwischen sich und einer inneren und/oder äußeren Umfangswandung des Ringspalts einen Steuerspalt, dessen lichter Durchflussquerschnitt unter dem Druck des durchströmenden Wassers veränderbar ist. Dabei ist an der den Steuerspalt begrenzenden inneren und/oder äußeren Umfangswandung eine in Durchströmrichtung orientierte und durch Wandungsein- und -ausformungen gebildete Regelprofilierung vorgesehen, in die sich der Drosselkörper druckabhängig mehr oder weniger einformen kann.

Man hat solche Durchflussmengenregler geschaffen, die mit einem zuströmseitigen Vorsatzsieb und einem abströmseitigen Strahlregler zu einer Einheit lösbar verbindbar sind, welche .Einheit mit Hilfe eines Auslaufmundstücks am Auslaufende des Wasserauslaufs einer sanitären Auslaufarmatur montierbar ist (vgl. DE 195 10 734 A1).

Auch kennt man bereits Durchflussmengenregler, die derart schmal ausgestaltet sind, dass sie unter das kegelförmige und mit einem Strahlregler lösbar verbindbare Vorsatzsieb passen. Diese vorbekannten Durchflussmengenregler sind jedoch in ihrer äußeren Form und/oder ihren Verbindungsmöglichkeiten an den abströmseitig nachgeschalteten Strahlregler und gegebenenfalls auch an das zuströmseitig vorgeschaltete Vorsatzsieb angepasst. Die vorbekannten Durchflussmengenregler sind jedoch nicht dazu bestimmt, auch nachträglich noch mit einem beliebigen, bereits vorhandenen Strahlregler verwendet zu werden.

Um die aus einer Auslaufarmatur auslaufende Wassermenge zu begrenzen, hat man auch sogenannte Durchflussbegrenzer geschaffen. Diese Durchflussbegrenzer sind scheibenförmig ausgestaltet und weisen im Zentrum ihrer Scheibenform eine Durchflussöffnung auf, die einen an das pro Zeiteinheit angestrebte Durchflussvolumen angepassten lichten Öffnungsquerschnitt haben. Mit diesen statischen Durchflussbegrenzern wird das angestrebte Durchflussvolumen aber nur in etwa erreicht oder eingehalten, weil ein erhöhter Wasserdruck bei diesen Durchflussbegrenzern stets auch zu einem entsprechend erhöhten Durchflussvolumen führt.

Aus der EP 1 933 217 A1 ist eine aus einem Strahlregler, einem Vorsatzsieb und einem dazwischen geschalteten Durchflussmengenregler bestehende Einheit vorbekannt. Dabei weist der Durchflussmengenregler der vorbekannten Einheit ein schalenförmiges Reglergehäuse auf, das einen auf den zuströmseitigen Stirnumfangsrandbereich eines Strahlreglers aufsetzbaren und als ein radial nach außen vorstehender Ringflansch ausgestalteten Außenumfangsrandbereich hat und einen zentralen Ringspalt aufweist, in dem ein ringförmiger Drosselkörper aus elastischem Material vorgesehen ist, der zwischen sich und einer inneren und/oder äußeren, mit einer Regelprofilierung versehenen Umfangswandung des Ringspaltes einen Steuerspalt begrenzt, dessen lichter Durchflussquerschnitt unter dem Druck des durchströmenden Wassers veränderbar ist. Das Reglergehäuse des Durchflussmengenreglers sitzt dabei mit einem abströmseitigen Teilbereich auf einer zuströmseitigen Ausnehmung des Strahlreglers auf, während der zuströmseitige Teilbereich des Reglergehäuses über die Zuströmseite des Strahlreglers vorsteht und auf der dem Strahlregler abgewandten Stirnseite zur Aufnahme des Vorsatzsiebes ausgestaltet ist. Die aus EP 1 933 217 A1 vorbekannte Einheit weist aufeinander abgestimmte Komponenten auf, die so ausgestaltet sind, dass jeweils das abströmseitige Bauteil in das zuströmseitige Bauteil passt und somit der Strahlregler nicht ohne den Durchflussmengenregler in Verbindung mit dem Vorsatzsieb verwendet werden kann. Da aber der zuströmseitige Teilbereich des Durchflussmengenreglers weit über die Zuströmseite des Strahlreglers vorsteht, ist die aus EP 1 933 217 A1 vorbekannte Einheit nur in solchen Auslaufarmaturen einsetzbar, die über die benötigte Einbauhöhe verfügen.

Aus der DE 82 08 024 U1 ist ein hülsenförmiges Auslaufmundstück vorbekannt, das am Wasserauslauf einer sanitären Auslaufarmatur montierbar ist. In dem Hülseninnenraum des Auslaufmundstücks ist ein Strahlregler bis zu einem Einsetzanschlag eingesetzt. In dem Hülseninnenraum des Auslaufmundstücks ist auch ein Durchflussmengenregler vorgesehen, der auf der Zuströmseite des Strahlreglers angeordnet und von diesem durch einen am Hülseninnenumfang des Auslaufmundstücks anliegenden Abstandsring auf Abstand gehalten ist. Der Abstandsring hält den Strahlregler und den Durchflussmengenregler derart auf Abstand, dass darin ein glocken- oder kegelförmiges Vorsatzsieb zwischengeschaltet ist. Auch diese, aus DE 82 08 024 U1 vorbekannte Einheit weist in ihrer Form aufeinander abgestimmte Bauteile auf, von denen das eine Bauteil nicht ohne die anderen Bauteile verwendbar ist. Da die Bauteile aufeinander abgestimmt sind, da der Strahlregler und der Durchflussmengenregler über einen, das Vorsatzsieb aufnehmenden Abstandsring auf Abstand gehalten sind, und da diese Bestandteile somit eine vergleichsweise große Einbauhöhe haben, ist ein entsprechend langes Auslaufmundstück erforderlich.

Es besteht daher insbesondere die Aufgabe, eine sanitäre Einheit der eingangs erwähnten Art zu schaffen, mit der sich ein pro Zeiteinheit angestrebtes Durchflussvolumen unabhängig vom aktuellen Wasserdruck vergleichsweise genau erreichen oder einhalten lässt, wobei ihr Durchflussmengenregler bei Bedarf auch nachträglich noch mit dem in der Auslaufarmatur bereits vorhandenen Strahlregler kombinierbar und verwendbar sein soll.

Die erfindungsgemäße Lösung dieser Aufgabe besteht bei der sanitären Einheit der eingangs erwähnten Art insbesondere darin, dass der zur Abströmseite hin offene Schaleninnenraum des Reglergehäuses zur Aufnahme eines über den Stirnumfangsrandbereich des Strahlreglers vorstehenden Teilbereiches des Vorsatzsiebes bemessen ist.

Bei der aus einem Strahlregler, einem Vorsatzsieb und einem Durchflussmengenregler bestehenden erfindungsgemäßen Einheit weist der Durchflussmengenregler ein Reglergehäuse auf, das schalenförmig ausgestaltet ist. Das schalenförmige Reglergehäuse hat einen Außenumfangsrandbereich, der als ein radial nach außen vorstehender Ringflansch ausgestaltet ist. Der erfindungsgemäß verwendete Durchflussmengenregler ist mit dem als flacher Ringflansch ausgestalteten Außenrandbereich seines Reglergehäuses auf den zuströmseitigen Stirnumfangsradbereich eines abströmseitig benachbarten Strahlreglers und/oder Vorsatzsiebes aufsetzbar. Der in der erfindungsgemäßen Einheit verwendete Durchflussmengenregler kann somit auch nachträglich noch in einer bereits vorhanden Einbausituation verwendet werden, in der ein Strahlregler und ein vorgeschaltetes Vorsatzsieb bereit vorhanden und am Auslaufende einer sanitären Auslaufarmatur montiert sind. Dabei wird der erfindungsgemäße Durchflussmengenregler lediglich mit seinem als Ringflansch ausgestalteten Außenumfangsrandbereich auf den zuströmseitigen Stirnumfangsrandbereich des Strahlreglers derart aufgesetzt, dass der Durchflussmengenregler die Zuströmseite des Strahlreglers und das dem Strahlregler vorgeschaltete Vorsatzsieb überdeckt. Der Durchflussmengenregler der erfindungsgemäßen Einheit weist einen zentralen Ringspalt auf, in dem ein ringförmiger Drosselkörper aus elastischem Material vorgesehen ist, der zwischen sich und einer inneren und/oder äußeren Umfangswandung des Ringspalts einen Steuerspalt begrenzt, dessen lichter Durchflussquerschnitt unter den Druck des durchströmenden Wassers veränderbar ist. An der Umfangswandung ist eine Regelprofilierung vorgesehen, in die sich der elastische Drosselkörper druckabhängig mehr oder weniger stark einformen oder einschmiegen kann, derart, dass sich der lichte Durchflussquerschnitt des Steuerspalts unter dem Druck des durchströmenden Wassers verändert. Mit Hilfe des in der erfindungsgemäßen Einheit verwendeten Durchflussmengenreglers ist also ein nachträgliches druckkompensierendes Upgrade einer vorhandenen Einbausituation möglich, die bis dahin nur einen nicht-wässersparenden und einen ungeregelten Durchfluss aufweisenden Strahlregler und ein Vorsatzsieb umfasste. Mit Hilfe des Durchflussmengenreglers der erfindungsgemäßen Einheit lässt sich das pro Zeiteinheit durchströmende Wasservolumen wesentlich genauer auf einen festgelegten Wert einregeln und begrenzen, als dies mit den vorbekannten Durchflussbegrenzern möglich wäre.

Die aus Vorsatzsieb und Strahlregler bestehenden handelsüblichen Einheiten weisen regelmäßig eine Ringdichtung auf, die zwischen dem abströmseitigen Stirnrand der Auslaufarmatur und dem zuströmseitigen Stirnumfangsrandbereich des Strahlreglers abdichtet. Da der in der erfindungsgemäßen Einheit verwendete Durchflussmengenregler nun auf dem Außenumfangsrandbereich des Strahlreglers aufliegt, ist es vorteilhaft, wenn zumindest auf der zuströmseitigen Stirnfläche des Ringflansches eine Ringdichtung vorgesehen ist, die wieder gegenüber dem abströmseitigen Stirnrand der Auslaufarmatur abdichtet.

Um die Ringdichtung gegen einen unbeabsichtigten Verlust des Durchflussmengenreglers in der erfindungsgemäßen Einheit zu sichern, ist es zweckmäßig, wenn die Ringdichtung den Ringflansch außenrandseitig umgreift.

Wenn eine umlaufende Abdichtung des Durchflussmengenreglers gegenüber dem abströmseitigen Stirnrand der Auslaufarmatur einerseits und gegenüber dem in Strömungsrichtung nachgeschalteten Strahlregler andererseits gewünscht oder benötigt wird, kann es vorteilhaft sein, wenn die Ringdichtung einen auf der zuströmseitigen und einen auf der abströmseitigen Stirnfläche des Ringflansches vorgesehenen Ringdichtungs-Teilbereich hat.

Dabei sieht eine bevorzugte Ausführungsform gemäß der Erfindung, die mit geringem Aufwand herstellbar ist, vor, dass das Reglergehäuse als Mehrkomponenten-Spritzgussteil ausgebildet ist und dass die den Ringflansch außenrandseitig umgreifende Ringdichtung aus einer elastischen oder elastomeren Materialkomponente hergestellt ist.

Die Kompatibilität des Durchflussmengenreglers der erfindungsgemäßen Einheit zu den handelsüblichen Strahlreglern wird begünstigt, wenn der Ringspalt etwa koaxial zur Gehäuse-Längsachse des Reglergehäuses angeordnet ist.

Eine bevorzugte Ausführungsform gemäß der Erfindung sieht vor, dass der Drosselkörper mit einer an der den Ringspalt umgrenzenden Innenumfangswandung vorgesehenen Regelprofilierung zusammenwirkt.

Die vielseitige Verwendbarkeit der erfindungsgemäßen Einheit wird begünstigt, wenn der Strahlregler in ein hülsenförmiges Auslaufmundstück einsetzbar ist und wenn die Ringdichtung über den zuströmseitigen Stirnumfangsrandbereich des Auslaufmundstücks vorsteht.

Zusätzliche Ausgestaltungen der Erfindung ergeben sich aus den Ansprüchen und der Beschreibung in Verbindung mit der Zeichnung. Nachstehend ist die Erfindung mit ihren wesentlichen Einzelheiten anhand der Zeichnung noch näher erläutert.

Es zeigt:

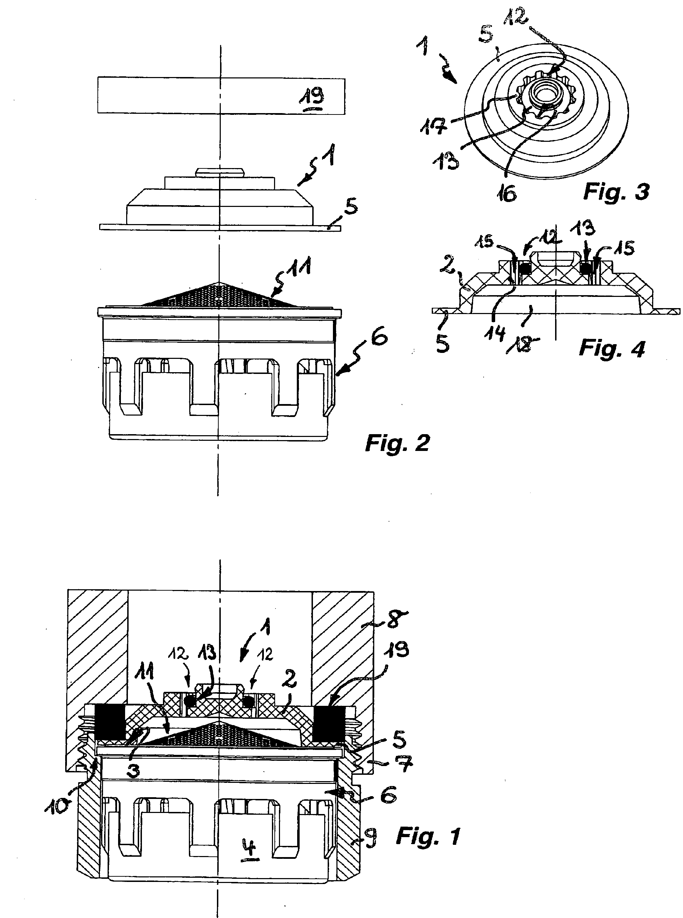

- Fig. 1: einen Strahlregler mit einem Vorsatzsieb, der in ein hülsenförmiges Auslaufmundstück eingesetzt ist, das an seinem Außenumfang ein Außengewinde trägt, mit dem das Auslaufmundstück in ein am Auslaufende einer sanitären Auslaufarmatur vorgesehenes Innengewinde eingeschraubt ist, wobei dem Strahlregler ein hier längsgeschnitten dargestellter Durchflussmengenregler mit einem schalenförmigen Reglergehäuse vorgeschaltet ist, dessen auf den zuströmseitigen Stirnumfangsrandbereich des Strahlreglers aufsetzbarer Außenumfangsrandbereich als ein radial nach außen vorstehender Ringflansch ausgestaltet ist und wobei auf der zuströmseitigen Stirnfläche des Ringflansches eine Rinddichtung aufliegt, die über den zuströmseitigen Stirnumfangsrandbereich des Auslaufmundstücks vorsteht,
- Fig. 2: den Strahlregler mit Vorsatzsieb, den Durchflussmengenregler und die Ringdichtung aus Figur 1 in einer auseinandergezogenen Darstellung,
- Fig. 3: den Durchflussmengenregler aus Figur 1 und 2 in einer perspektivischen Darstellung,
- Fig. 4: den Durchflussmengenregler aus Figur 1 bis 3 in einem Längsschnitt,
- Fig. 5: den Durchflussmengenregler aus Figur 1 bis 4, wobei hier zusätzlich auch auf der abströmseitigen Stirnfläche des Ringflansches des Durchflussmengenreglers eine Ringdichtung vorgesehen ist,
- Fig. 6: den Strahlregler mit Vorsatzsieb, die abströmseitige Ringdichtung, den Durchflussmengenregler selbst sowie die gegenüber dem Durchflussmengenregler zuströmseitige Ringdichtung in einer auseinandergezogenen Darstellung,
- Fig. 7: den Durchflussmengenregler aus Fig. 5 und 6 in einer perspektivischen Darstellung, und
- Fig. 8: den Durchflussmengenregler aus Fig. 5 bis 7 in einem Längsschnitt.

In den Fig. 1 bis 8 ist ein Durchflussmengenregler 1 in zwei verschiedenen Ausführungen dargestellt. Der Bestandteil einer aus einem Strahlregler 6, einem Vorsatzsieb 11 sowie dem Durchflussmengenregler 1 bestehenden sanitären Einheit ist. Der Durchflussmengenregler 1 weist ein Reglergehäuse 2 auf, das einen auf den zuströmseitigen Stirnumfangsrandbereich 3 eines hülsenförmigen Strahlreglergehäuses 4 aufsetzbaren Aüßenumfangsrandbereich 5 hat. Das Strahlreglergehäuse 4 ist Bestandteil eines Strahlreglers 6, der hier als belüfteter Strahlregler ausgestaltet ist und einen homogenen, nichtspritzenden und hier auch perlend-weichen Wasserstrahl formen soll.

Um den Strahlregler 6 am Auslaufende 7 einer sanitären Auslaufarmatur 8 lösbar montieren zu können, ist ein hülsenförmiges Auslaufmundstück 9 vorgesehen, in welches der Strahlregler 6 von der Zuströmseite aus bis zu einem hier als Ringabsatz 10 ausgestalteten Einsetzanschlag einsetzbar ist. In einem zuströmseitigen Gehäuseteilbereich des Strahlreglergehäuses 4 ist ein Vorsatzsieb 11 lösbar befestigt, dass die im Wasser eventuell mitgeführten Schmutzpartikel zurückzuhalten hat und dass nur mit einem zentralen Teilbereich seiner kegelförmigen Außenkontur über die Zuströmstirnseite des Strahlreglers 6 vorsteht.

Das Reglergehäuse 2 des Durchflussmengenreglers 1 weist einen zentralen Ringspalt 12 auf, in dem ein ringförmiger Drosselkörper 13 aus elastischem Material vorgesehen ist. Dieser Drosselkörper 13 begrenzt zwischen sich und einer äußeren Innenumfangswandung 14 einen Steuerspalt 15, dessen lichter Durchflussquerschnitt unter dem Druck des durchströmenden Wassers veränderbar ist. An der Innenumfangswandung 14 ist dazu eine aus in Strömungsrichtung orientierten Wandungsein- und - ausformungen 16, 17 bestehende Regelprofilierung vorgesehen, in die sich der ringförmige elastische Drosselkörper 13 mit zunehmendem Druck immer mehr einformen und einschmiegen kann, derart, dass sich der lichte Durchflussquerschnitt des Steuerspaltes 15 mit steigendem Druck zunehmend verengt.

Das Reglergehäuse 2 des Durchflussmengenreglers 1 ist schalenförmig ausgebildet. Dabei ist der Außenumfangsrandbereich 5 des schalenförmigen Reglergehäuses 2 als ein radial nach außen vorstehender Ringflansch ausgestaltet. Der zur Abströmseite hin offene Schaleninnenraum 18 des Reglergehäuses 2 ist so bemessen, dass darin der über die Zuströmstirnseite und insbesondere den Stirnumfangsrandbereich 3 des Strahlreglers 6 vorstehende Teilbereich des Vorsatzsiebes 11 aufgenommen werden kann.

Der Durchflussmengenregler 1 kann somit auch nachträglich noch in einer bereits vorhandenen Einbausituation verwendet werden, in der ein Strahlregler 6 und ein vorgeschaltetes Vorsatzsieb 11 bereits vorhanden und am Auslaufende 7 einer sanitären Auslaufarmatur 8 montiert sind. Dabei wird der Durchflussmengenregler 1 lediglich mit seinem als Ringflansch ausgestalteten Außenumfangsrandbereich 5 auf den zuströmseitigen Stirnumfangsrandbereich 3 des Strahlreglers 6 derart aufgesetzt, dass der Durchflussmengenregler 1 die Zuströmseite des Strahlreglers 6 und das dem Strahlregler 6 vorgeschaltete Vorsatzsieb 11 überdeckt. Mit Hilfe des Durchflussmengenreglers 1 ist also ein nachträgliches druckkompensierendes Upgrade einer vorhandenen Einbausituation möglich, die bis dahin nur einen Strahlregler 6 und ein Vorsatzsieb 11 umfasste. Mit Hilfe des Durchflussmengenreglers 1 lässt sich das pro Zeiteinheit durchströmende Wasservolumen wesentlich genauer auf einen festgelegten Wert einregeln und begrenzen, als dies mit den vorbekannten Durchflussbegrenzern möglich wäre.

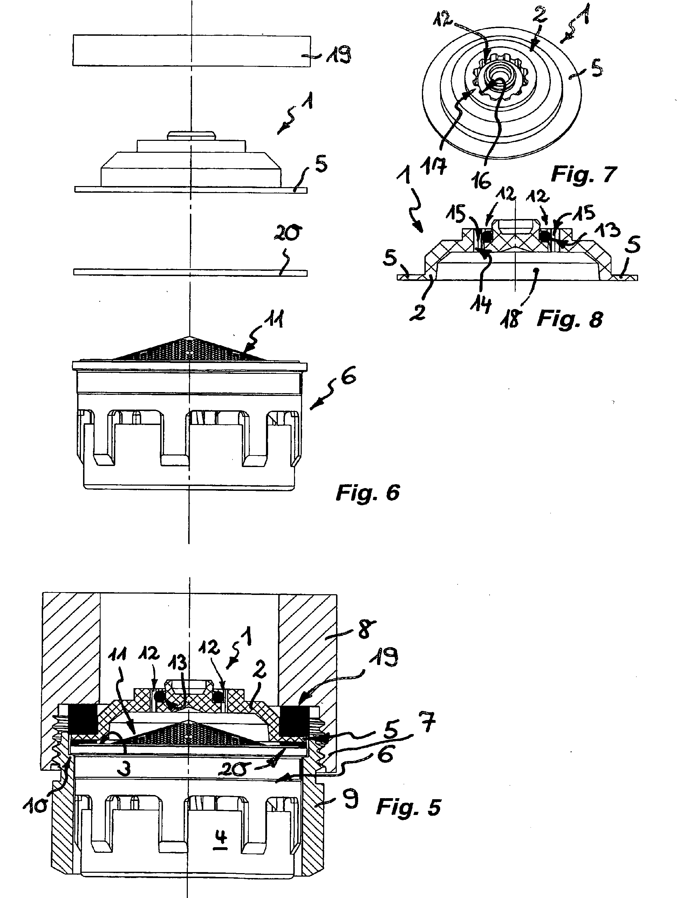

Aus einem Vergleich der in den Fig. 1 bis 4 einerseits und in den Fig. 5 bis 8 andererseits dargestellten Ausführungen wird deutlich, dass zumindest auf der zuströmseitigen Stirnfläche des Ringflansches eine Ringdichtung 19 vorgesehen ist, die unerwünschte Kriechströme am Außenumfang des Strahlreglergehäuses 4 vorbei verhindern soll. Während die in den Fig. 1 bis 4 dargestellte Ausführung nur eine solche zuströmseitige Ringdichtung 19 hat, die auf der Zuströmseite des Ringflansches aufliegt und über den zuströmseitigen Stirnumfangsrandbereich des Auslaufmundstücks 9 vorsteht, ist bei der in den Fig. 5 bis 8 gezeigten Ausführung zusätzlich auch eine abströmseitige Ringdichtung 20 vorgesehen, die zwischen der Abströmseite des Ringflansches und dem zuströmseitigen Stirnumfangsrandbereich 3 des Strahlreglers 6 abdichtet.

Eine weitere, hier nicht dargestellte Ausführung sieht vor, dass die Ringdichtung den Ringflansch außenrandseitig umgreift. Dabei kann die Ringdichtung einen auf der zuströmseitigen und einen auf der abströmseitigen Stirnfläche des Ringflansches vorgesehenen Ringdichtungs-Teilbereich aufweisen. Bei einer solchen Ausführungsform kann es besonders vorteilhaft sein, wenn das Reglergehäuse als Mehrkomponenten-Spritzgußteil ausgebildet ist und wenn die den Ringflansch außenrandseitig umgreifende Ringdichtung aus einer elastischen oder elastomeren Materialkomponente hergestellt ist.

In den Fig. 1 und 5 ist erkennbar, dass der Ringspalt 12 etwa koaxial zur Gehäuse-Längsachse des Reglergehäuses 2 angeordnet ist.

## Patentansprüche

1. Sanitäre Einheit bestehend aus einem Strahlregler (6), einem Vorsatzsieb (11) und einem Durchflussmengenregler (1), dessen schalenförmiges Reglergehäuse (2) einen auf den zuströmseitigen Stirnumfangsrandbereich (3) des Strahlreglers (6) und/oder des Vorsatzsiebes (11) aufsetzbaren und als radial nach außen vorstehender Ringflansch ausgestalteten Außenumfangsrandbereich (5) hat und einen zentralen Ringspalt (12) aufweist, in dem ein ringförmiger Drosselkörper (13) aus elastischem Material vorgesehen ist, der zwischen sich und einer inneren und/oder äußeren, mit einer Regelprofilierung versehenen Umfangswandung (14) des Ringspaltes (12) einen Steuerspalt (15) begrenzt, dessen lichter Durchflussquerschnitt unter dem Druck des durchströmenden Wassers veränderbar ist, **dadurch gekennzeichnet, dass** der zur Abströmseite hin offene Schaleninnenraum (18) des Reglergehäuses (2) zur Aufnahme eines über den Stirnumfangsrandbereich (3) des Strahlreglers (6) vorstehenden Teilbereiches des Vorsatzsiebes (11) bemessen ist.

2. Sanitäre Einheit nach Anspruch 1, **dadurch gekennzeichnet, dass** zumindest auf der zuströmseitigen Stirnfläche des am Reglergehäuse (2) angeordneten Ringflansches eine Ringdichtung (19) vorgesehen ist.

3. Sanitäre Einheit nach Anspruch 2, **dadurch gekennzeichnet, dass** die Ringdichtung (19) den Ringflansch außenrandseitig umgreift.

4. Sanitäre Einheit nach Anspruch 3, **dadurch gekennzeichnet, dass** die Ringdichtung (19) den Ringflansch außenrandseitig derart umgreift, dass die Ringdichtung einen auf der zuströmseitigen und einen auf der abströmseitigen Stirnfläche des Ringflansches vorgesehenen Ringdichtungs-Teilbereich hat.

5. Sanitäre Einheit nach einem der Ansprüche 2 bis 4, **dadurch gekennzeichnet, dass** das Reglergehäuse (2) als Mehrkomponenten-Spritzgussteil ausgebildet ist, und dass die den Ringflansch außenrandseitig umgreifende Ringdichtung aus einer elastischen oder elastomeren Materialkomponente hergestellt ist.

6. Sanitäre Einheit nach einem der Ansprüche 1 bis 5, **dadurch gekennzeichnet, dass** der Ringspalt (12) etwa koaxial zur Gehäuse-Längsachse des Reglergehäuses (2) angeordnet ist.

7. Sanitäre Einheit nach einem der Ansprüche 1 bis 6, **dadurch gekennzeichnet, dass** der Drosselkörper mit einer an der den Ringspalt (12) umgrenzenden Innenumfangswandung (14) vorgesehenen Regelprofilierung zusammenwirkt.

8. Sanitäre Einheit nach einem der Ansprüche 2 bis 7, **dadurch gekennzeichnet, dass** der Strahlregler (6) in ein hülsenförmiges Auslaufmundstück (9) einsetzbar ist, und dass die Ringdichtung (19) über den zuströmseitigen Stirnumfangsrandbereich des Auslaufmundstücks (9) vorsteht.

## Claims

1. Sanitary unit consisting of a jet regulator (6), an upstream screen (11) and a throughflow rate regulator (1), the shell-like regulator housing (2) of which has an outer peripheral edge region (5) which can be placed onto the inflow-side end peripheral edge region (3) of the jet regulator (6) and/or of the upstream screen (11) and which is designed as an annular flange protruding radially outwards, and the regulator housing comprises a central annular gap (12) in which an annular restrictor body (13) made from elastic material is provided, which defines a control gap (15) between itself and an inner and/or outer peripheral wall (14) of the annular gap (12), which is provided with regulating profiling, the clear throughflow cross-section of which control gap can be modified under the pressure of the through-flowing water, **characterised in that** the shell interior space (18), which is open towards the outflow side, of the regulator housing (2) is dimensioned to receive a sub-region of the upstream screen (11), which protrudes over the end peripheral edge region (3) of the jet regulator (6).

2. Sanitary unit as claimed in claim 1, **characterised in that** an annular seal (19) is provided at least on the inflow-side end surface of the annular flange disposed on the regulator housing (2).

3. Sanitary unit as claimed in claim 2, **characterised in that** the annular seal (19) engages around the annular flange on the outer edge side.

4. Sanitary unit as claimed in claim 3, **characterised in that** the annular seal (19) engages around the annular flange on the outer edge side in such a way that the annular seal has an annular seal sub-region provided on the inflow-side end surface of the annular flange and an annular seal sub-region provided on the outflow side end surface of the annular flange.

5. Sanitary unit as claimed in any one of claims 2 to 4, **characterised in that** the regulator housing (2) is formed as a multi-component injection-moulded part, and that the annular seal engaging around the annular flange on the outer edge side is produced from an elastic or elastomeric material component.

6. Sanitary unit as claimed in any one of claims 1 to 5, **characterised in that** the annular gap (12) is arranged approximately coaxially with respect to the housing longitudinal axis of the regulator housing (2).

7. Sanitary unit as claimed in any one of claims 1 to 6, **characterised in that** the restrictor body cooperates with a regulating profile provided on the inner peripheral wall (14) defining the annular gap (12).

8. Sanitary unit as claimed in any one of claims 2 to 7, **characterised in that** the jet regulator (6) can be inserted into a sheath-like discharge mouthpiece (9), and that the annular seal (19) protrudes over the inflow-side end peripheral edge region of the discharge mouthpiece (9).

## Revendications

1. Unité sanitaire composée d'un régulateur de jet (6), d'un tamis d'entrée (11) et d'un régulateur de débit (1) dont le boîtier de régulateur (2) en forme de cuvette présente un bord périphérique extérieur (5) pouvant être posé sur le bord périphérique frontal (3) côté arrivée du régulateur de jet (6) et/ou du tamis d'entrée (11) et conformé comme une bride annulaire en saillie radiale vers l'extérieur, et présente une fente annulaire centrale (12) dans laquelle est prévu un corps d'étranglement annulaire (13) en matière élastique qui délimite entre lui et une paroi périphérique intérieure et/ou extérieure (14) de la fente annulaire (12), qui est pourvue d'un profilage de régulation, une fente de commande (15) dont la section intérieure d'écoulement est variable sous la pression de l'eau qui la traverse,
**caractérisée en ce que** l'espace intérieur de la cuvette (18) ouvert côté sortie du boîtier de régulateur (2) est dimensionné pour recevoir une zone partielle du tamis d'entrée (11) en saillie sur le bord périphérique frontal (3) du régulateur de jet (6).

2. Unité sanitaire selon la revendication 1, **caractérisée en ce qu'**un joint annulaire (19) est prévu au moins sur la surface frontale côté arrivée de la bride annulaire disposée sur le boîtier de régulateur (2).

3. Unité sanitaire selon la revendication 2, **caractérisée en ce que** le joint annulaire (19) entoure la bride annulaire côté bord extérieur.

4. Unité sanitaire selon la revendication 3, **caractérisée en ce que** le joint annulaire (19) entoure la bride annulaire côté bord extérieur de telle façon que le joint annulaire présente une zone partielle de joint annulaire prévue sur la surface frontale côté arrivée et une prévue sur la surface frontale côté sortie de la bride annulaire.

5. Unité sanitaire selon l'une des revendications 2 à 4, **caractérisée en ce que** le boîtier de régulateur (2) est réalisé sous la forme d'une pièce moulée par injection multicomposant, et que le joint annulaire entourant la bride annulaire côté bord extérieur est réalisé à partir d'un composant en matière élastique ou élastomère.

6. Unité sanitaire selon l'une des revendications 1 à 5, **caractérisée en ce que** la fente annulaire (12) est disposée à peu près coaxialement à l'axe longitudinal du boîtier de régulateur (2).

7. Unité sanitaire selon l'une des revendications 1 à 6, **caractérisée en ce que** le corps d'étranglement coopère avec un profilage de régulation prévu sur la paroi périphérique intérieure (14) entourant la fente annulaire (12).

8. Unité sanitaire selon l'une des revendications 2 à 7, **caractérisée en ce que** le régulateur de jet (6) peut être inséré dans un embout de sortie (9) en forme de douille, et que le joint annulaire (19) est en saillie sur le bord périphérique frontal côté arrivée de l'embouchure de sortie (9).
